# EUROPEAN PATENT APPLICATION

(11) **EP 1 914 642 A1**
(43) Date of publication of application: **23.04.2008**
(21) Application number: 06255354.0
(22) Date of filing: 18.10.2006
(51) Int. Cl.: G06F 17/30

(54) **Provision of contextual information**

(71) Applicant: BRITISH TELECOMMUNICATIONS public limited company, London EC1A 7AJ (GB)
(72) Inventor: The designation of the inventor has not yet been filed
(74) Representative: Lofting, Coreena Fiona Anne

(57) **Abstract**

Apparatus for providing contextual information about content of a presentation to a user, including
- presentation means for presenting the content, the content including content metadata,
- searching means for obtaining the contextual information from a data source, wherein the searching means is arranged in use to find a match in the data source using the content metadata, and
- providing means for presenting the contextual information to the user.

## Description

This invention relates to apparatus and method for the provision of contextual information in a media presentation, and is of particular application within a narrative flow.

In presentations such as movies, television commercials, slideshow presentations, and so on, content is presented to the viewer or user typically as a linear narrative over time. During such presentations, a viewer or user may wish to find out more about a certain aspect of the content, e.g. the year the film was made, who directed the film being watched, and perhaps as a further enquiry, what other films the director has been involved in. Such information which pertains to the content or any aspect thereof, shall be referred to herein as "contextual information".

To do so, the user could try to commit to memory the subject of interest, and to remember to do so in the first place: to this end he could for example write a note to himself. The chances of his following this up are low, as he could have forgotten the subject of interest or that he had the interest in the first place.

Alternatively he could, while the presentation is still ongoing, look up the subject of interest e.g. in a library or such other data storage area or database, or as is becoming increasingly common, conduct a search on a public network such as the Internet. Powerful modern-day search engines have the reach, range and depth to search Internet and other resources and to obtain results relevant to the subject of interest to the user. However in doing so, the user will have to turn his attention away from the narrative flow and/or disrupt the narrative flow of the presentation. Often he will also have to physically leave the area where the presentation is being made.

Conventional search engines for searching and obtaining information from a database or a network using keywords are known. Typically, users will need to have some knowledge about the subject being searched, as keyword-based searches are based on finding a match for a sequence of alphanumeric characters in e.g. a database store or webpage. Where the wrong or inaccurate keywords are used, the user will not be able to obtain a pertinent result even if it exists. In the context of the type of presentations discussed above, a user may have little foreknowledge of the subject he wishes to find out about, and so may find it difficult to construct a suitable keyword search. To use the example of the film director, the user may have to key in the name of the film, but if he does not have this information (or has forgotten it or remembers it wrongly), the search will not be properly formulated and the user will not obtain the desired information.

The applicants have developed a solution to address the issues centred around the provision of information relating to the background and context of a linear narrative presentation, in a manner which minimises the disruption to the user's experience during the presentation.

According to a first aspect of the invention, there is provided apparatus for providing contextual information about content of a presentation to a user, including
- presentation means for presenting the content, the content including content metadata,
- searching means for obtaining the contextual information from a data source, wherein the searching means is arranged in use to find a match in the data source using the content metadata, and
- providing means for presenting the contextual information to the user.

The apparatus of the invention harnesses the functionality of powerful search engines to search and find contextual information from databases or from the Internet and presents the results to users in a manner which minimises disruption to the user's following the narrative flow of the content being presented. Further preferred embodiments include features which personalise and further enrich the user's experience of the content presentation.

According to a second aspect of the invention, there is provided a method for providing contextual information about content of a presentation to a user, including the steps of
- presenting the content to a user, the content including content metadata,
- searching for the contextual information from a data source and finding a match in the data source using the content metadata, and
- providing the obtained contextual information to the user.

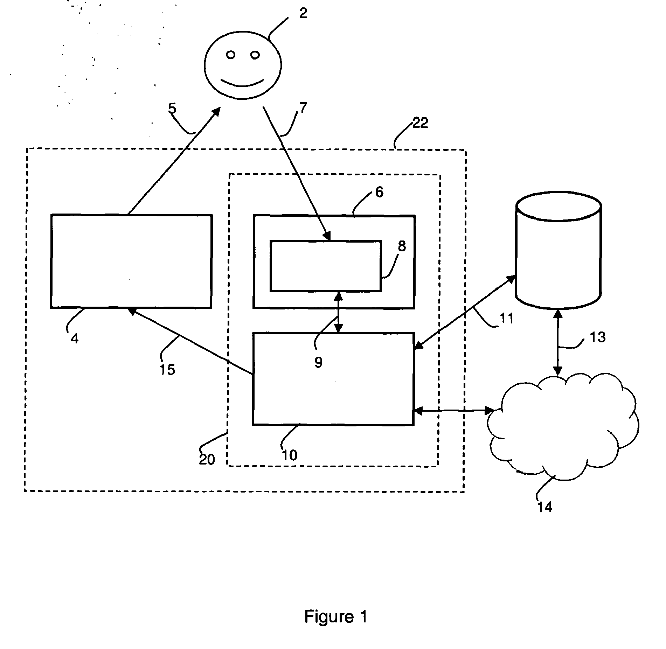

The invention will now be described, by way of example only, with reference to Figure 1 which is a block diagram of an embodiment of the invention.

In Figure 1, a user (2) is an audience of a presentation which content is presented (5) on a presentation device (4), which can be any type of audio-visual, multimedia or other device or apparatus capable of sensory output and presenting content having a narrative flow. In one embodiment, the presentation device is a television. The user can control (7) the functioning (e.g. power on/off) of the television using a controlling device (6) to control aspects of the settings of the television programme being watched (e.g. channel, brightness, sound volumes). The control device can be integrally and/or physically linked to the television set, or wirelessly-linked in the form of e.g. a handheld remote control.

According to the invention, there is also provided within the system means (8) for the user to find out more about the programme which is currently being presented to him. In the embodiment shown in Figure 1, a button (8) located for this purpose on the control device (6). The button could of course also be provided as a dedicated button on a device separate from the controlling device and/or the television set.

To obtain more information about the television programme, the user activates (7) the button (8) (herein referred to as the "tell me more" button). This causes a message containing search keywords to be sent (9) to a search engine (10). The search engine accesses (11) a database or databases (12) and using the search keywords, searches for a match in the database for the contextual information required by the user. The database or databases can be created and maintained specifically for the particular purpose, e.g. by the television station which is broadcasting the programme, or a film studio for its films, or even one which is dedicated to the particular television programme. Alternatively, the search engine can access the database or databases via a private or public network (14) such as an intranet (e.g. in a peer-to-peer network), or the Internet.

The database in this case can be any data store available to the user and the system and apparatus of the invention, including private and public information stores which are generated and/or maintained by commercial entities (e.g. film companies), interest groups (e.g. fan clubs) or individuals (e.g. weblogs).

According to the invention, the content output by the presentation device (4) is pre-metatagged or otherwise marked up in a manner which identifies the content. In a preferred embodiment, the content includes a number of metatags, each referring to a separate section of the content. For example, a film could include separate metatags for each act of the story, or each scene. Using a number of metatags is of particular application for content which is generated on-the-fly (i.e. in response to a request by a user), where each section of the content could be separately metatagged.

Such metatags can be included into the content by various parties, such as the producer, director, the actors, the film company, and so on. The metatags at the most basic could simply identify the programme or content and/or part thereof, e.g. in the form of the movie name and other identification such as the film genre etc. As much more complex information could be included as is desired, e.g. a synopsis of the scene, or a description of the furniture used in the set, or the precise make and model number of the boom microphone used for the lead actress in the second act of the movie.

The skilled person would realise that the metadata need not consist of a description which would be immediately understood by a human (e.g. "The Maltese Falcon; Humphrey Bogart; John Huston", etc.): the description could comprise an identification number or other code which could serve as the basis of the enquiry by the search engine. For example, in the case of a database dedicated to the single television programme, a metatag could simply consist of the time elapsed from the start of the programme. However if the search engine is expected to access the Internet in its search for contextual information, it may be expected that the metatags could comprise natural languages to serve as keyword search terms. Of course, the metatags could comprise one or both types of information.

In another embodiment of the invention, information about the user can also be stored within the system of the invention. Such user information can take the form of a user profile, user preferences, and so on. This can be pre-generated (e.g. manually or else automatically using various known automated classification methods) and pre-stored (e.g. within the television set (4) itself, the search engine (6) or the like). Alternatively they can be generated by the user only when he wishes to use the "tell me more" button (8). The system can be arranged to store the user information of a number of users e.g. the members of a household.

According to the invention, the search engine (6) uses the information contained in the metatags of the content either as search keywords to obtain a match in the database. Alternatively, the metatag information could be used to formulate search keywords to find a match to obtain the required contextual information. This allows for a search to be conducted automatically with a single key press, without disrupting the user's experience of the television programme. Importantly, the user is also not taken physically away from the television set to conduct the search.

In a preferred embodiment, the search keywords or terms used by the search engine could further include user information to obtain contextual information about the television programme (or the section thereof). By doing so, the obtained contextual information can be personalised to the user. Thus, the contextual information sought and obtained for a child could be very different from that for an adult film buff.

In another preferred embodiment, the system is arranged to permit the user to further personalise the search for contextual information with the use of the user's own input for use as search keywords or terms. This user input can be used for searching purposes together with the content metatag information, or even further in combination with user information. For this purpose, an input device can be arranged to operate with the system. The input device may be made integral to the remote control device (6), or else be a separate piece of equipment, such as a pointing device (e.g. a mouse), a keyboard, or the like.

Once obtained, the contextual information could be presented to the user in a variety of ways. In the embodiment shown in Figure 1, the information from the database is sent back (15) to the presentation device (4) via the search engine. The skilled person would realise that other routes from the database to the presentation device are within the scope of the invention.

Typically, the presentation could take the form which would be familiar to users of the Internet, e.g. in the form of text, still and moving images, and sound effects. The skilled person would realise that the manner and order of presentation could take various forms e.g. upon activating the "tell me more" button, the user could be presented with the playback of an electronic multimedia file, with an option of finding out even more e.g. by activating the button again and again as is desired.

Alternatively, the contextual information could be presented to the user in the form of a "hits" list of hyperlinks to Internet websites. In a preferred embodiment, the list of hits could be ranked according to various criteria, e.g. relevance to the user in accordance with the user information available to the system.

In one embodiment, the contextual information presentation could be displayed in a "screen-in-a-screen" mode, i.e. where the television programme is being shown on the full screen of the television, while the contextual information is present in a smaller defined area on the full screen. This allows for the contextual information to be made available to the user who can view it at the same time as the television programme, without disrupting the linear narrative or flow of the television programme. In a preferred embodiment, the user can if desired, switch over his full attention to the screen with the contextual information, and could select to use the full screen for the presentation of the contextual information. While this may disrupt the linear flow of the television programme, this occurs only at the user's option. Alternatively the user may choose to bookmark or store the contextual information obtained during the presentation of the television programme to save for later viewing.

The obtained contextual information could also be displayed by means other than the presentation device (4): for example, there could be a separate display or multimedia device dedicated to the presentation of contextual information to the user. This could be relevant e.g. where the contextual information is presented in a format which is not supported by the presentation means (4) e.g. where the contextual information is of a haptic nature which cannot be presented to the user via a normal television set.

The configurations as described above and in the drawings are for ease of description only and not meant to restrict the apparatus or methods to a particular arrangement or process in use. It will be apparent to the skilled person that various sequences and permutations on the methods and apparatus described are possible within the scope of this invention as disclosed. For example, the invention need not be restricted to use with pre-recorded content. The content metadata and other information forming the search keywords or terms could be provided to the user in the form of an electronic file or track containing such metadata, etc. stored on a device controlled by the user. During the live performance, the track or file could be run or played back in parallel or in sync with the live performance, in a manner which allows the user to search for and have contextual information presented to him, or alternatively to have it bookmarked and/or stored for later use.

## Claims

1. Apparatus for providing contextual information about content of a presentation to a user, including
- presentation means for presenting the content, the content including content metadata,
- searching means for obtaining the contextual information from a data source, wherein the searching means is arranged in use to find a match in the data source using the content metadata, and
- providing means for presenting the contextual information to the user.

2. Apparatus according to claim 1 wherein the searching means includes means for the searching means to communicate with the data source via a search engine, and the search engine is arranged in use to find the match in the data source.

3. Apparatus according to claim 2 wherein the search engine is located remotely of the apparatus, and the data source is located remotely of the search engine.

4. Apparatus according to any preceding claim wherein the searching means is arranged to use content metadata pertaining to a section of the content, to find the match in the data source.

5. Apparatus according to any preceding claim wherein the searching means is arranged to use content metadata provided by a provider of the content or part thereof to find the match in the data source.

6. Apparatus according to any one of claims 1 to 5 wherein the searching means is arranged to use content metadata provided by the user to find the match in the data source.

7. Apparatus according to any preceding claim wherein the search engine is further arranged to find the match in the data source using data about the user to find the match in the data source.

8. Apparatus according to any preceding claim further including keyword input means for the user to input keywords, and wherein the searching means is arranged to use the keywords and the content metadata to find the match in the data source.

9. Apparatus according to any preceding claim wherein the providing means is located remotely of the presentation means.

10. Apparatus according to any preceding claim wherein the data source comprises a database.

11. Apparatus according to claim 10 wherein the data source comprises further or in the alternative a public network.

12. A method for providing contextual information about content of a presentation to a user, including the steps of
- presenting the content to a user, the content including content metadata,
- searching for the contextual information from a data source and finding a match in the data source using the content metadata, and
- providing the obtained contextual information to the user.

13. A method according to claim 12 wherein the step of searching for contextual information includes communicating with the data source via a search engine, and wherein the search engine searches for the match in the data source.

14. A method according to claim 12 or claim 13 wherein the step of searching for contextual information comprises using content metadata pertaining to a section of the content, to find the match in the data source.

15. A method according to any one of claims 12 to 14 wherein the step of searching for contextual information comprises using content metadata provided by a provider of the content or part thereof to find the match in the data source.

16. A method according to any one of claims 12 to 14 wherein the step of searching for contextual information comprises using content metadata provided by the user to find the match in the data source.

17. A method according to any one of claims 12 to 16 wherein the step of searching for contextual information comprises using data about the user to find the match in the data source.

18. A method according to claim 17 wherein the data about the user comprises user profile information.

19. A method according to any one of claims 12 to 17 wherein the step of searching for contextual information includes using keywords input by the user and the content metadata to find the match in the data source.

20. A method according to any one of claims 12 to 19 wherein the obtained contextual information is presented to the user in the form of dynamic links to the data source.

21. A method according to any one of claims 12 to 21 wherein the obtained contextual information is ranked according to predetermined criteria.
